# EUROPÄISCHE PATENTSCHRIFT

(11) **EP 0 724 268 B1**
(45) Veröffentlichungstag und Bekanntmachung des Hinweises auf die Patenterteilung: **08.07.1998**
(21) Anmeldenummer: 95116646.1
(22) Anmeldetag: 23.10.1995
(51) Int. Cl.: G12B 9/08, F15B 15/28

(54) **Linearantrieb mit Sensorausstattung**
Linear drive with sensor attachment
Moteur électrique linéaire avec méthode d'analyse sensorielle

(30) Priorität: 25.01.1995 DE 29501140 U
(43) Veröffentlichungstag der Anmeldung: 31.07.1996
(73) Patentinhaber: FESTO AG & Co, 73734 Esslingen (DE)
(72) Erfinder: Stoll, Kurt, Dr., D-73732 Esslingen (DE); Feyrer,Thomas, D-73733 Esslingen (DE)
(74) Vertreter: Abel, Martin, Dipl.-Ing.

(56) Entgegenhaltungen:
- DE-A- 2 516 495
- DE-A- 4 127 204
- DE-A- 4 127 205

## Beschreibung

Die Erfindung betrifft einen Linearantrieb, mit einem Gehäuse, das an seiner Außenfläche wenigstens eine zur Sensorbefestigung dienende, längs verlaufende Verankerungsnut aufweist, die einen Nuthals und einen tiefer als der Nuthals liegenden und breiter als dieser ausgebildeten Verankerungsabschnitt besitzt, wobei ein in der Verankerungsnut festgelegter Sensor mit einem Befestigungsabschnitt in dem Verankerungsabschnitt aufgenommen ist, und wobei von dem Sensor ein zur übermittlung von Sensorsignalen dienendes Sensorkabel abgeht.

Eine Linearantrieb dieser Art geht beispielsweise aus dem deutschen Gebrauchsmuster G 94 14 869.4 hervor. An der Außenfläche seines Gehäuses ist eine sich in Längsrichtung erstreckende, längsseits offene Verankerungsnut angeordnet, die einen schmäleren Nuthals und, in Tiefenrichtung daran anschließend, einen breiteren Verankerungsabschnitt aufweist. In der Verankerungsnut können Sensoren lösbar festgelegt werden, die im festgelegten Zustand mit einem Befestigungsabschnitt in den Verankerungsabschnitt hineinragen. An der Oberseite des Sensors befindet sich eine Kabelausgangsstelle, von wo aus ein Sensorkabel abgeht, das mit einer Steuereinrichtung verbindbar ist. Der Sensor spricht auf eine in den Kolben des Linearantriebes integrierte Magneteinrichtung an, woraus gewisse Sensorsignale resultieren. Diese werden von der Steuereinrichtung verarbeitet und können beispielsweise dazu verwendet werden, die Betriebsweise des Linearantriebes zu steuern.

Bei unsachgemäßer Verlegung der Sensorkabel besteht stets die Gefahr, daß im Betrieb des Linearantriebes Beschädigungen hervorgerufen werden. Sei es, daß ein Sensorkabel abreißt, weil es mit einem bewegten Element kollidiert, sei es, daß der Isolationsmantel beschädigt wird und Kurzschlüsse auftreten.

Um dieser Problematik zu begegnen, hat man in der DE 39 23 063 C2 bereits vorgeschlagen, die Signalkabel ganz zu entfernen und die Sensorsignale über in das Gehäuse des Linearantriebes integrierte Leiterbahnen zu übertragen. Dies erfordert jedoch vor allem auf der elektrischen Seite einen erhöhten baulichen Aufwand, der mit einer Verteuerung des Produkts verbunden ist, was nicht bei allen Anwendungen toleriert werden kann.

Es ist daher die Aufgabe der vorliegenden Erfindung, im Zusammenhang mit einem Linearantrieb der eingangs genannten Art eine kostengünstige Maßnahme vorzugeben, die die Beschädigungsgefahr für Signalkabel auch bei einer Mehrfachanordnung von Sensoren in ein und derselben Verankerungsnut reduziert.

Zur Lösung dieser Aufgabe ist vorgesehen, daß die Querschnittsgestaltung des Verankerungsabschnittes der Verankerungsnut und des Befestigungsabschnittes des Sensors derart aufeinander abgestimmt sind, daß bei festgelegtem Sensor zwischen dessen Befestigungsabschnitt und der Wand des Verankerungsabschnittes mindestens ein in Längsrichtung durchgehender Kabeldurchführungskanal vorliegt, durch den bei gleichzeitiger Festlegung mehrerer Sensoren in der Verankerungsnut mindestens ein in der Verankerungsnut verlegtes Sensorkabel wenigstens eines weiteren Sensors hindurchgeführt ist.

Es ist nun möglich, die von den einzelnen Sensoren abgehenden Sensorkabel in der Verankerungsnut selbst gut geschützt zu verlegen. Ist nur ein einziger Sensor vorhanden, läßt sich dessen Sensorkabel problemlos im Innern der Verankerungsnut entlangführen. Das Sensorkabel eines etwaigen weiteren Sensors wird nun ebenfalls im Innern der Verankerungsnut verlegt, wobei es innerhalb der Verankerungsnut an dem erstgenannten Sensor vorbeigeführt wird, der zusammen mit dem Verankerungsabschnitt der Verankerungsnut einen seitlich neben ihm angeordneten Kabeldurchführungskanal definiert, so daß das Sensorkabel des weiteren Sensors, ohne die Verankerungsnut zu verlassen, vorbeigeführt werden kann. Der Sensor selbst hält das Signalkabel dabei in dem Kabeldurchführungskanal zurück, so daß es nicht durch den Nuthals hindurch entweichen kann. Ein nachträgliches Justieren eines in die Verankerungsnut eingesetzten Sensors wird nicht behindert, weil der Kabeldurchführungskanal dem betreffenden Sensor unmittelbar zugeordnet ist und sich mit diesem praktisch mitbewegt.

Bei ausreichend großem Querschnitt des Kabeldurchführungskanals können gleichzeitig Sensorkabel mehrerer weiterer Sensoren hindurchgeführt werden.

Vorteilhafte Weiterbildungen der Erfindung sind in den Unteransprüchen aufgeführt.

Bei entsprechender Abstimmung der erwähnten Querschnittsgestaltung lassen sich im Bereich des jeweiligen Sensors mehrere Kabeldurchführungskanäle vorgeben, die es ermöglichen, mehrere Sensorkanäle gleichzeitig unabhängig voneinander an dem betreffenden Sensor vorbeizuführen. Als besonders vorteilhaft wird es derzeit angesehen, einem jeweiligen Sensor zwei Kabeldurchführungskanäle zuzuordnen, die den betreffenden Sensor auf einander entgegengesetzten Längsseiten, insbesondere im Bereich der Nutflanken, flankieren.

Befindet sich die Kabelausgangsstelle für das Signalkabel des Sensors bei festgelegtem Sensor innerhalb der Verankerungsnut, so besteht grundsätzlich die Möglichkeit zu einer vollständig in dem Gehäuse des Linearantriebes versenkten Kabelführung der Signalkabel.

Durch eine in die Verankerungsnut eingesetzte Abdeckleiste, die zweckmäßigerweise lösbar eingeclipst wird, kann bei Bedarf verhindert werden, daß Signalkabel, die über eine lange Wegstrecke im Innern der Verankerungsnut verlaufen, versehentlich aus dieser herausfallen.

Zur Bildung der Kabeldurchführungskanäle ist es vorteilhaft, wenn die Verankerungsnut eine besondere Querschnittskonturierung aufweist. Diese kann sich vorzugsweise dadurch auszeichnen, daß in wenigstens einem der übergangsbereiche zwischen den Nutflanken und dem Nutgrund der Verankerungsnut eine längs verlaufende Längsvertiefung eingeformt ist, nach Art einer Hohlkehle. Die Querschnittskontur dieser Längsvertiefung ist vorzugsweise konkav abgerundet. Zweckmäßigerweise befindet sich im übergangsbereich zwischen jeder Nutflanke und dem Nutgrund eine derartige Längsvertiefung, so daß der Sensor im festgelegten Zustand auf beiden Längsseiten von einem Kabeldurchführungskanal flankiert wird. Der Sensor selbst kann hierbei vorzugsweise klotzähnlich gestaltet sein.

Weisen die beiden Nutflanken der Verankerungsnut einen Schrägverlauf auf, so daß sie sich ausgehend vom Nuthals in Richtung zum Nutgrund allmählich voneinander entfernen, so ergibt sich der weitere vorteilhafte Effekt, daß die Verankerungsnut auch eine zuverlässige Fixierung von Nutensteinen ermöglicht, mit denen irgend welche zusätzlichen Bauteile am Gehäuse des Linearantriebes festgelegt werden können.

Nachfolgend wird die Erfindung anhand der beiliegenden Zeichnung näher erläutert. In dieser zeigen:
- Fig. 1: eine bevorzugte Bauform des erfindungsgemäßen Linearantriebes mit Sensorausstattung in einer ausschnittsweisen perspektivischen Darstellung im Querschnitt gemäß Schnittlinie I-I aus Fig. 2,
- Fig. 2: den Linearantrieb aus Fig. 1 in Draufsicht auf die nach oben weisende Außenfläche und
- Fig. 3: einen Querschnitt durch die Anordnung aus Fig. 2 gemäß Schnittlinie III-III im Bereich der dort gezeigten Verankerungsnut.

Die Figuren zeigen einen Linearantrieb 1, der von einem fluidisch, insbesondere pneumatisch betätigten Arbeitszylinder gebildet ist. Es könnte sich beispielsweise auch um einen elektrisch betätigten Linearantrieb handeln.

In bevorzugter Bauform ist der Linearantrieb 1 als sogenannter kolbenstangenloser Arbeitszylinder ausgebildet. Er verfügt über ein rohrförmiges Gehäuse 2 mit linearer Längserstreckung, das vorliegend als Profilrohr gestaltet ist. Es besteht insbesondere aus Aluminiummaterial und kann ein extrudiertes Ziehprofil sein.

Im Innern des Gehäuses 2 befindet sich ein sich längs erstreckender Innenraum 3. Dieser nimmt einen axial verschiebbaren Kolben 4 auf, der den Innenraum 3 in zwei Arbeitsräume unterteilt. Beide Arbeitsräume können nach Bedarf mit einem fluidischen Druckmittel beaufschlagt werden, so daß sich der Kolben 4 axial in Längsrichtung 5 verlagert. Diese Kolbenbewegung kann außen am Gehäuse 2 an einem mit dem Kolben 4 verbundenen Mitnehmer 6 abgegriffen werden. Dieser ist mit dem Kolben 4 bewegungsgekoppelt und ragt durch einen Längsschlitz 7 des Gehäuses 2 nach außen. Zur Abdichtung des Innenraumes 3 dient ein Dichtband 8, das von innen her an den Flanken des Längsschlitzes 7 anliegt und diesen abdeckt. Endseitig ist es an nicht näher dargestellten Abschlußwänden des Gehäuses 2 festgelegt, im Bereich des Kolbens 4 wird es von dem Längsschlitz 7 abgehoben, so daß der Mitnehmer 6 durch diesen hindurchgreifen kann. Linearantriebe dieser Art werden in der Regel als Schlitzzylinder bezeichnet, Näheres zu ihrer grundsätzlichen Ausgestaltung kann beispielsweise aus der DE 41 37 789 C2 entnommen werden, auf die hiermit besonders verwiesen wird.

Das Gehäuse 2 des Ausführungsbeispiels hat ein rechteckiges, insbesondere quadratisches äußeres Querschnittsprofil. Somit verfügt es über vier sich in Längsrichtung erstreckende Außenflächen 9. Eine dieser Außenflächen wird durch den Längsschlitz 7 in der Mitte längsgeteilt. In die anderen der Außenflächen 9 ist jeweils eine sich in Längsrichtung über die gesamte Gehäuselänge erstreckende lineare Verankerungsnut 10 eingebracht. Diese Verankerungsnuten 10 verlaufen zweckmäßigerweise ebenfalls mittig, so daß sie die zugeordnete Außenfläche 9 in zwei gleichbreite Längsstreifen unterteilen. Prinzipiell wäre es natürlich auch möglich, einer oder mehreren der Außenflächen 9 mehr als eine Verankerungsnut 10 zuzuordnen oder überhaupt keine Verankerungsnut vorzusehen. Die über den Außenumfang verteilte Anordnung hat allerdings den Vorteil einer universelleren Verwendbarkeit.

Die Verankerungsnuten 10 dienen primär zur Befestigung von Sensoren 14, die beim Ausführungsbeispiel dazu dienen, bestimmte axiale Positionen des Kolbens 4 zu erfassen. Der Aufbau dieser Sensoren 14 ist grundsätzlich beliebig, beispielsweise kann es sich um induktive Sensoren, magnetoresistive Sensoren oder magnetostriktive Sensoren handeln. Beim Ausführungsbeispiel sind sie von sogenannten Reed-Schaltern gebildet, die durch ein in ihren Einflußbereich gelangendes Magnetfeld betätigt werden. Dieses Magnetfeld wird vorliegend von einer dauermagnetischen Magneteinrichtung 15 geliefert, die an dem Kolben 4 befestigt ist. Sobald sich der Kolben 4 mit der Magneteinrichtung 15 radial innen an einem Sensor 14 vorbeibewegt, wird dieser berührungslos betätigt, so daß er ein oder mehrere Sensorsignale abgibt. Diese Sensorsignale werden über ein am jeweiligen Sensor 14 angeordnetes Sensorkabel 13 an eine nicht näher dargestellte Steuereinrichtung übermittelt, beispielsweise eine speicherprogrammierbare Steuerung (SPS). Diese Steuereinrichtung kann beispielsweise in der Lage sein, in Abhängigkeit von den erhaltenen Sensorsignalen eine Ventileinrichtung zu betätigen, die ihrerseits die Zufuhr und Abfuhr von Druckmittel bezüglich des Linearantriebes 1 steuert, so daß auf diese Weise eine Steuerung des Betriebsverhaltens des Linearantriebes 1 möglich ist.

Die Verankerungsnuten 10 können ferner dazu verwendet werden, weitere Bauteile an dem Gehäuse 2 festzulegen. Beispielsweise könnte ein weiterer Linearantrieb befestigt werden, um eine mehrachsige Antriebseinheit zu schaffen. Die Befestigung erfolgt vorzugsweise unter Verwendung sogenannter Nutensteine 16, die sich wie die Sensoren 14 in der Verankerungsnut 10 fixieren lassen.

Die Verankerungsnuten 10 haben jeweils einen eine Engstelle definierenden Nuthals 17, der zweckmäßigerweise zumindest annähernd in der zugeordneten Außenfläche 9 verläuft und die schlitzartige Längsöffnung der Verankerungsnut 10 bildet, über die die Verankerungsnut über ihre gesamte Länge zur Außenfläche 9 hin offen ist.

An den Nuthals 17 schließt sich in Tiefenrichtung, also radial in Richtung zu dem Innenraum 3 hin, ein Verankerungsabschnitt 18 an, der breiter ist als der Nuthals 17. Im Anschluß an den Nuthals 17 erweitert sich die Verankerungsnut 10 beidseits in Querrichtung, so daß der Nuthals 17 mittig über dem Verankerungsabschnitt 18 zu liegen kommt.

Handelt es sich bei der Verankerungsnut 10 um eine sogenannte Schwalbenschwanznut, so kann der Nuthals 17 unmittelbar vom engsten Bereich des Nutquerschnittes gebildet sein. Vorliegend hat der Nuthals 17 eine gewisse geringe Tiefe, beispielsweise im Bereich von 2 mm, worauf sich der Verankerungsabschnitt 18 anschließt. Dieser ist seitlich von zwei Nutflanken 19 begrenzt, die im Querschnitt gesehen jeweils einen Schrägverlauf besitzen und sich ausgehend vom Nuthals 17 in Tiefenrichtung voneinander entfernen. An ihrem Ende gehen sie mit einem übergangsbereich 20 in den Nutgrund 21 über, der vorliegend parallel zur zugeordneten Außenfläche 9 verläuft. Unter Einbeziehung des Nuthalses 17 hat der Verankerungsabschnitt 18 somit die Querschnittsgestalt ähnlich einem gleichschenkeligen Trapez.

Die beispielsgemäßen Sensoren 14 haben eine im wesentlichen klotzartige Gestalt. Sie besitzen ein Gehäuse 22 mit einem abgestuften Rechteckquerschnitt. Ein Gehäuseabschnitt bildet einen Befestigungsabschnitt 23, seine Höhe entspricht etwa der Höhe des Verankerungsabschnittes 18, und seine Breite ist etwas größer als die Breite des Nuthalses 17. Ein jeweiliger Sensor 14 ist mit seinem Befestigungsabschnitt 23 im Verankerungsabschnitt 18 der zugeordneten Verankerungsnut 10 aufgenommen. An den Befestigungsabschnitt 23 schließt sich zur Außenfläche 9 hin ein etwas schmälerer streifenförmiger Zentrierabschnitt 24 an, dessen Breite in etwa der Breite des Nuthalses 17 entspricht, in den er hineinragt. Auf diese Weise ist ein in die Verankerungsnut 10 eingesetzter Sensor 14 sowohl in Querrichtung fixiert, als auch gegen ein Herausheben durch den Nuthals 17 hindurch gesichert. Der Nuthals 17 wird von dem breiteren Befestigungsabschnitt 23 innen hintergriffen.

Je nach Ausgestaltung des Sensors 14 kann der Zentrierabschnitt 24 außen über die Außenfläche 9 vorragen. Im Falle der kompakten Bauform des Ausführungsbeispiels schließt der Zentrierabschnitt 24 innerhalb der Verankerungsnut 10 ab, wobei er zweckmäßigerweise bündig mit der Außenfläche 9 verläuft.

Die Montage eines Sensors 14 in einer Verankerungsnut 10 erfolgt beim Ausführungsbeispiel derart, daß der betreffende Sensor 14 über die stirnseitig offene Verankerungsnut 10 in diese eingeschoben wird. Ist die gewünschte Längsposition entlang des Gehäuses 2 erreicht, wird der Sensor 14 lösbar gehäusefest festgelegt. Dies geschieht beim Ausführungsbeispiel mit Hilfe mindestens einer Klemmschraube 25, die in einem Gewinde des Gehäuses 22 läuft und dieses in Nut-Tiefenrichtung durchsetzt. Schraubt man die Klemmschraube 25 gegen den Nutgrund 21 vor, wird der Befestigungsabschnitt 23 nach oben gegen die den Nuthals 17 beidseits flankierenden Wandabschnitte des Verankerungsabschnittes 18 gedrückt und somit festgeklemmt.

Es wäre auch möglich, die einzelnen Sensoren 14 mit ihrem Befestigungsabschnitt 23 durch den Nuthals 17 hindurch in die Verankerungsnut 10 einzuschwenken, so daß auch bei abgedeckten Nut-Stirnseiten eine einfache Montage möglich ist.

Auf Grund der geschilderten konstruktiven Gegebenheiten ist die Querschnittsgestaltung des Befestigungsabschnittes 23 eines jeweiligen Sensors 14 derart auf die Querschnittsgestaltung des Verankerungsabschnittes 18 der Verankerungsnut 10 abgestimmt, daß umfangsseitig zwischen dem Befestigungsabschnitt 23 des in der Verankerungsnut 10 angeordneten Sensors und der Wand 26 des Verankerungsabschnittes 18 zwei Kabeldurchführungskanäle 27, 27' vorliegen. Diese Kabeldurchführungskanäle 27, 27' sind über die gesamte Länge des betreffenden Sensors 14 durchgehend ausgebildet, erstrecken sich also praktisch über die gesamte Sensorlänge. Die einem jeweiligen Sensor 14 zugeordneten Kabeldurchführungskanäle 27, 27' ermöglichen es, bei gleichzeitiger Festlegung mehrerer Sensoren 14 in ein und derselben Verankerungsnut 10 die Sensorkabel 13 der anderen Sensoren 14 hindurchzuführen und auf diese Weise an dem betreffenden Sensor 14 innerhalb der Verankerungsnut 10 vorbeizuführen.

Beim Ausführungsbeispiel ist die Anordnung so getroffen, daß sich neben jedem Sensor 14 zwei derartige Kabeldurchführungskanäle 27, 27' befinden, die den Sensor 14 auf einander entgegengesetzten Längsseiten flankieren. Sie befinden sich in den erwähnten Übergangsbereichen 20. Erleichtert wird das Verlegen der Sensorkabel 13 dadurch, daß in den erwähnten Übergangsbereichen 20 zusätzlich in Längsrichtung verlaufende Längsvertiefungen 28 in den Verankerungsabschnitt 18 eingeformt sind, die nach Art von Hohlkehlen den Nutquerschnitt vergrößern. Im Querschnitt gesehen sind die Längsvertiefungen 28, 28' rinnenähnlich ausgebildet, mit konkaver gerundeter Formgebung, wobei es sich um eine kreisbogenförmige Krümmung handeln kann, die beispielsgemäß an den Durchmesser der Sensorkabel 13 angepaßt ist.

Die Längsvertiefungen 28, 28' bilden jeweils eine sich über die gesamte Länge der Verankerungsnut 10 erstreckende durchgehende Passage, die längsseits offen ist. Ein jeweiliger in den Verankerungsabschnitt 18 eingesetzter Befestigungsabschnitt 23 deckt diese Passage über eine der Sensorlänge entsprechende Länge ab, wobei der abgedeckte Abschnitt dieser Passage den Kabeldurchführungskanal 27, 27' definiert.

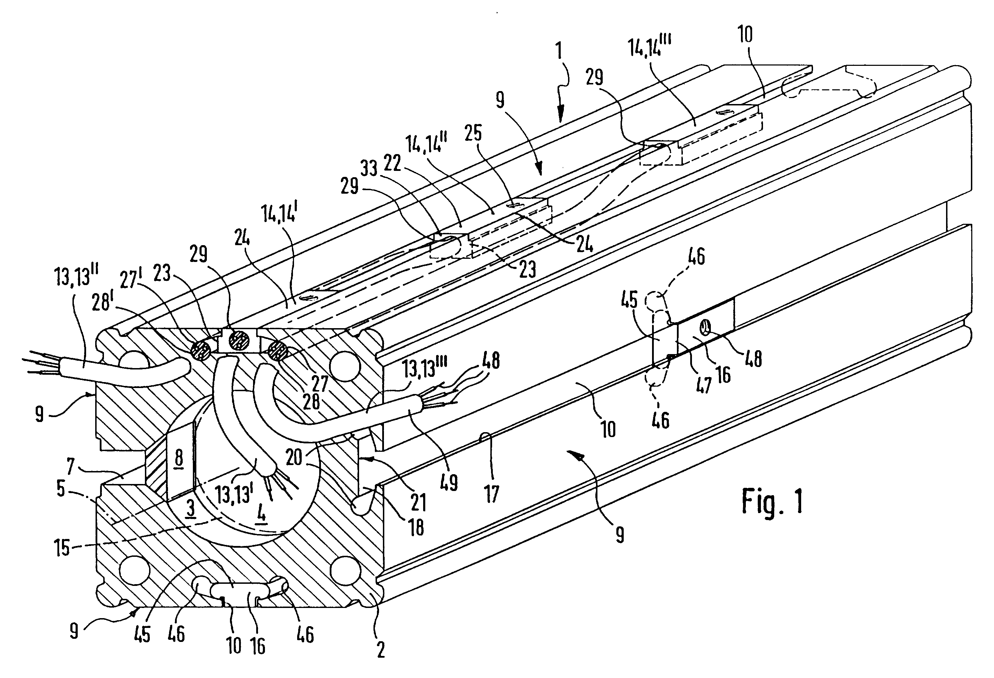

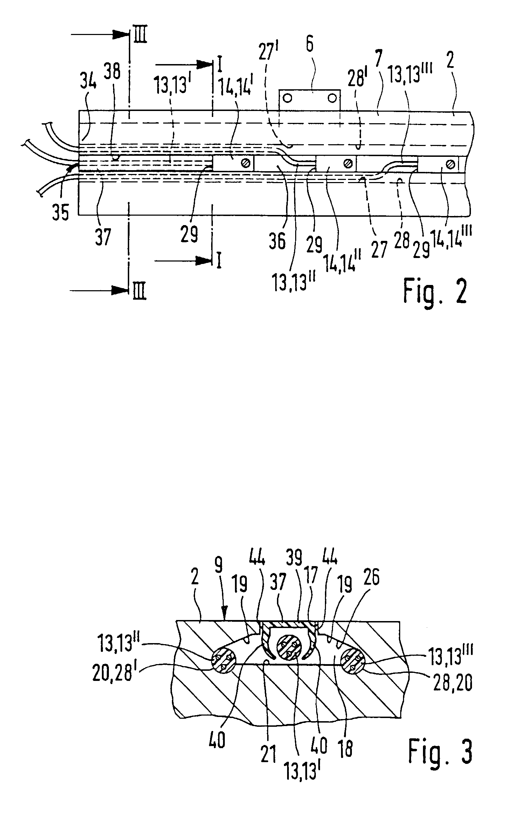

Die aus dieser Anordnung resultierenden Vorteile machen die Fig. 1 und 2 deutlich. Der Linearantrieb 1 ist hier in der nach oben weisenden Verankerungsnut 10 mit drei axial aufeinanderfolgend angeordneten Sensoren 14 der geschilderten Art ausgestattet. Die Kabelausgangsstellen 29, an denen die Sensorkabel 13 aus dem zugeordneten Sensor 14 austreten, befinden sich an einer Stirnseite 33 des Sensorgehäuses 22. Die Sensorkabel 13 können wie abgebildet fest mit dem Sensor 14 verdrahtet sein. Möglich wäre es aber auch, an der Kabelausgangsstelle 29 eine z.B. als Stecker ausgebildete Verbindungseinrichtung vorzusehen, die ein lösbares Anschließen des Sensorkabels 13 ermöglicht.

Die Kabelausgangsstellen 29 befinden sich innerhalb der zugeordneten Verankerungsnut 10, so daß das betreffende Sensorkabel 13 direkt in die betreffende Verankerungsnut 10 abgeht.

Die drei Sensoren 14 sind so angeordnet, daß ihre Kabelausgangsstellen 29 in die gleiche axiale Richtung zum gleichen stirnseitigen Endbereich 34 des Gehäuses 2 des Linearantriebes 1 weisen. Das Sensorkabel 13, 13' des dem stirnseitigen Endbereich 34 am nächsten liegenden Sensors 14, 14' verläuft geradlinig mittig in der Verankerungsnut 10 und tritt erst an der offenen Stirnseite der Verankerungsnut 10 am stirnseitigen Endbereich 34 aus. Zwischen dem Sensor 14' und der stirnseitigen Austrittsstelle 35 aus der Verankerungsnut 10 ist das Sensorkabel 13' vollständig in die Verankerungsnut 10 und dabei insbesondere in den Verankerungsabschnitt 18 eingetaucht.

Das Sensorkabel 13'' des darauffolgenden mittleren Sensors 14'' verläuft zunächst ein Stück weit in dem zwischen dem ersten und dem zweiten Sensor 14', 14'' liegenden Nutabschnitt 36. Es schwenkt dann zur Seite ab und durchläuft den einen Kabeldurchführungskanal 27' neben dem ersten Sensor 14'. Im Anschluß daran verläuft es in dem sich anschließenden Abschnitt der zugeordneten Längsvertiefung 28 weiter, bis es ebenfalls an der Austrittsstelle 35 nach außen gelangt.

Das Sensorkabel 13''' des dritten Sensors 14, 14''' läuft durch einen Kabeldurchführungskanal 27 des mittleren Sensors 14'' und anschließend durch einen auf der gleichen Seite liegenden Kabeldurchführungskanal 27 des ersten Sensors 14' hindurch bis zur Austrittsstelle 35. Nachdem es in den Kabeldurchführungskanal 27 des mittleren Sensors 14'' eingeführt ist, verläuft es zweckmäßigerweise bis zur Austrittsstelle 35 geradlinig in der zugeordneten Längsvertiefung 28.

Ersichtlich sind sämtliche Sensorkabel 13 versenkt innerhalb der Außenfläche 9 des Gehäuses 2 angeordnet, so daß sie keine exponierte Lage einnehmen und die Gefahr von Beschädigungen reduziert ist.

Von Vorteil ist bei der Anordnung, daß die Längsposition eines jeweiligen Sensors 14 beliebig variiert werden kann, ohne mit den vorbeilaufenden Sensorkabeln 13 zu kollidieren oder diese zu beschädigen. Man ist also hinsichtlich der Justierbarkeit der einzelnen Sensoren 14 nicht eingeschränkt.

Um zu verhindern, daß eines oder mehrere Sensorkabel 13 aus der Verankerungsnut 10 herausfallen, wenn die außerhalb der Kabeldurchführungskanäle 27, 27' zurückzulegende Wegstrecke verhältnismäßig lang ist, empfiehlt sich die Anbringung einer Abdeckleiste 37. Selbst bei einer Über-Kopf-Anordnung einer Verankerungsnut 10 wird somit verhindert, daß Sensorkabel 13 aus der Verankerungsnut 10 heraushängen.

Die beispielsgemäße Abdeckleiste 37 verschließt den zwischen dem ersten Sensor 14' und dem stirnseitigen Endbereich 34 liegenden Längenabschnitt 38 der Verankerungsnut 10. Sie ist beispielsgemäß U-förmig profiliert und besitzt einen Abdeckstreifen 39, von dem randseitig zwei Halteschenkel 40 abgehen. Außen befindet sich im übergangsbereich zwischen dem Abdeckstreifen 39 und einem jeweiligen Halteschenkel 40 eine in Längsrichtung durchgehende leichte Vertiefung 44. Die Halteschenkel 40 sind zu ihrem Ende hin sich verjüngend ausgebildet, wobei sie gebogen sein können. Sie sind insgesamt in Querrichtung mit Bezug zum Abdeckstreifen 39 federelastisch.

Zur Montage wird die Abdeckleiste 37 mit ihrer U-Öffnung voraus in die Verankerungsnut 10 eingedrückt, bis die Längsvertiefungen 44 in den Nuthals einrasten. Der Abdeckstreifen 39 verläuft hierbei zweckmäßigerweise bündig mit der Außenfläche 9. Eines der Sensorkabel 13, 13' kann in dem von der U-Gestaltung begrenzten Innenraum des Abdeckstreifens 39 verlaufen. Die beiden anderen Sensorkabel 13'', 13''' verlaufen beidseits der Abdeckleiste 37 neben einem jeweiligen Halteschenkel 40.

Die Abdeckleiste 37 besteht zweckmäßigerweise aus Kunststoffmaterial und kann auf jede gewünschte Länge zugeschnitten werden. Auf diese Weise können sämtliche Längenabschnitte der Verankerungsnut 10 verschlossen werden, auch Zwischenbereiche zwischen mit Abstand aufeinanderfolgend angeordneten Sensoren 14.

Die Querschnittskontur der Verankerungsnut 10 hat den weiteren Vorteil, daß sie in der Lage ist, große Kräfte aufzunehmen, so daß sie sich auch zur Verankerung von Nutensteinen 16 eignet. Ein und derselbe Typ von Verankerungsnut 10 kann daher sowohl wahlweise als auch gleichzeitig zur Verankerung von Sensoren 14 bzw. von Nutensteinen 16 genutzt werden. Daraus resultiert ein beträchtlicher Gewinn an Bauvolumen.

Die Nutensteine 16 lassen sich mit einem Halteabschnitt 45 in dem Verankerungsabschnitt 18 der Verankerungsnut 10 plazieren. Die Querschnittskontur des Halteabschnittes 45 entspricht derjenigen des Verankerungsabschnittes 18, abgesehen jedoch von den durch die Längsvertiefungen 28 definierten Querschnittsbereichen. Auf diese Weise bildet ein jeweiliger Halteabschnitt 45 mit dem momentan zugeordneten Längenabschnitt der Längsvertiefungen 28 ebenfalls Kabeldurchführungskanäle 46. Sie ermöglichen das Hindurchführen von Sensorkabeln 13, die in der gleichen Verankerungsnut 10 ange-ordnet sind wie der betreffende Nutenstein 16.

Der schräge Verlauf der Nutflanken 19 gewährleistet zusammen mit der komplementär konturierten Fläche des Halteabschnittes 45 eine sichere Fixierung des Nutensteins 16 im Verankerungsabschnitt 18. Ein sich an den Halteabschnitt 45 anschließender Halsabschnitt 47 ragt in den Nuthals 17 hinein und kann noch innerhalb der Außenfläche 9 bzw. bündig mit dieser abschließen. Im übrigen verfügt der Nutenstein 16 über an sich bekannte Befestigungsmittel 48, z.B. ein Gewinde, die die Befestigung von Zusatzbauteilen ermöglichen.

Die Sensorkabel des Ausführungsbeispiels sind mehradrig ausgeführt und umfassen beispielsweise zwei oder mehr Drähte 48, die von einem gemeinsamen Mantel 49 umgeben sind.

## Patentansprüche

1. Linearantrieb, mit einem Gehäuse (2), das an seiner Außenfläche (9) wenigstens eine zur Sensorbefestigung dienende, längs verlaufende Verankerungsnut (10) aufweist, die einen Nuthals (17) und einen tiefer als der Nuthals (17) liegenden und breiter als dieser ausgebildeten Verankerungsabschnitt (18) besitzt, wobei ein in der Verankerungsnut (10) festgelegter Sensor (14) mit einem Befestigungsabschnitt (23) in dem Verankerungsabschnitt (18) aufgenommen ist, und wobei von dem Sensor (14) ein zur Übermittlung von Sensorsignalen dienendes Sensorkabel (13) abgeht, dadurch gekennzeichnet, daß die Querschnittsgestaltung des Verankerungsabschnittes (18) der Verankerungsnut (10) und des Befestigungsabschnittes (23) des Sensors (14) derart aufeinander abgestimmt sind, daß bei festgelegtem Sensor (14) zwischen dessen Befestigungsabschnitt (23) und der Wand (26) des Verankerungsabschnittes (18) mindestens ein in Längsrichtung durchgehender Kabeldurchführungskanal (27, 27') vorliegt, durch den bei gleichzeitiger Festlegung mehrerer Sensoren (14', 14'', 14''') in der Verankerungsnut (10) mindestens ein in der Verankerungsnut (10) verlegtes Sensorkabel (13'', 13''') wenigstens eines weiteren Sensors (14'', 14''') hindurchgeführt ist.

2. Linearantrieb nach Anspruch 1, dadurch gekennzeichnet, daß zwischen dem Befestigungsabschnitt (23) eines in der Verankerungsnut (10) festgelegten Sensors (14) und der Wand (26) des Verankerungsabschnittes (18) mehrere Kabeldurchführungskanäle (27, 27') vorliegen.

3. Linearantrieb nach Anspruch 2, dadurch gekennzeichnet, daß neben dem betreffenden Sensor (14) zwei Kabeldurchführungskanäle (27, 27') verlaufen, die den Sensor (14) auf einander entgegengesetzten Längsseiten flankieren.

4. Linearantrieb nach einem der Ansprüche 1 bis 3, dadurch gekennzeichnet, daß gleichzeitig zwei oder mehr Sensoren (14, 14', 14'', 14''') in der Verankerungsnut (10) festgelegt sind, deren Sensorkabel (13, 13', 13'', 13''') mit gleicher Verlegerichtung in der Verankerungsnut (10) verlegt sind, wobei das Sensorkabel eines jeweiligen Sensors (13, 13'', 13''') durch Kabeldurchführungskanäle (27, 27') sämtlicher sich in Verlegerichtung anschließender Sensoren (13, 13', 13'') hindurchgeführt ist.

5. Linearantrieb nach einem der Ansprüche 1 bis 4, dadurch gekennzeichnet, daß die Kabelausgangsstelle (29) des Sensorkabels (13) derart an einer Stirnseite (33) des Sensors (14) vorgesehen ist, daß sie sich bei festgelegtem Sensor (14) innerhalb der Verankerungsnut (10) und vorzugsweise innerhalb des Verankerungsabschnittes (18) befindet.

6. Linearantrieb nach einem der Ansprüche 1 bis 5, dadurch gekennzeichnet, daß die Sensorkabel (13) sämtlicher in der Verankerungsnut (10) festgelegter Sensoren (14) wenigstens bis zu einem stirnseitigen Endbereich (34) des Gehäuses (2) des Linearantriebes (1) vollständig innerhalb der betreffenden Verankerungsnut (10) verlaufen.

7. Linearantrieb nach einem der Ansprüche 1 bis 6, gekennzeichnet durch mindestens eine in die Verankerungsnut (10) eingesetzte Abdeckleiste (37), die die Verankerungsnut (10) über wenigstens einen Teil ihrer Länge an ihrer dem Nuthals (17) zugeordneten Längsöffnung derart verschließt, daß in ihr verlaufende Signalkabel (13) am Heraustreten gehindert sind.

8. Linearantrieb nach Anspruch 7, dadurch gekennzeichnet, daß die Abdeckleiste (37) in die Verankerungsnut (10) lösbar eingeclipst ist.

9. Linearantrieb nach einem der Ansprüche 1 bis 8, dadurch gekennzeichnet, daß in die Verankerungsnut (10) in wenigstens einem der übergangsbereiche (20) zwischen ihren beiden Nutflanken (19) und dem Nutgrund (21) eine die Querschnittsfläche des Verankerungsabschnittes (18) vergrößernde, in Längsrichtung verlaufende Längsvertiefung (28) eingeformt ist, die zur Bildung eines Kabeldurchführungskanals (27, 27') beiträgt.

10. Linearantrieb nach Anspruch 9, dadurch gekennzeichnet, daß in beiden Obergangsbereichen (20) jeweils eine Längsvertiefung (28) vorgesehen ist.

11. Linearantrieb nach Anspruch 9 oder 10, dadurch gekennzeichnet, daß die beiden Nutflanken (19) der Verankerungsnut (10) einen Schrägverlauf besitzen und sich ausgehend vom Nuthals (17) in Richtung zum Nutgrund (21) voneinander entfernen.

12. Linearantrieb nach einem der Ansprüche 9 bis 11, dadurch gekennzeichnet, daß der Sensor (14) eine klotzähnliche Gestalt hat.

13. Linearantrieb nach einem der Ansprüche 9 bis 12, dadurch gekennzeichnet, daß die Verankerungsnut (10) auch zur Aufnahme von Nutensteinen (16) dient, die einen in dem Verankerungsabschnitt (18) angeordneten Halteabschnitt (45) aufweisen, dessen Querschnittskontur derjenigen des Verankerungsabschnittes (18) ohne die Längsvertiefungen (28) entspricht.

14. Linearantrieb nach einem der Ansprüche 1 bis 13, dadurch gekennzeichnet, daß über den Außenumfang des Gehäuses (2) verteilt mehrere Verankerungsnuten (10) vorhanden sind.

15. Linearantrieb nach einem der Ansprüche 1 bis 14, dadurch gekennzeichnet, daß er als kolbenstangenloser Linearantrieb ausgebildet ist.

## Claims

1. Linear drive with a housing (2), having on its outer surface (9) one or more longitudinal anchorage slots (10) with a slot neck (17) and an anchorage section (18) which is deeper and wider than the slot neck (17), wherein a sensor (14) located in the anchorage slot (10) is held in the anchorage section (18) by a fastening section (23), and wherein a sensor cable (13) for the transmission of sensor signals passes out of the sensor (14), characterized in that the cross-sectional shape of the anchorage section (18) of the anchorage slot (10) and of the fastening section (23) of the sensor (14) are so matched that, when the sensor (14) is fixed in place there is at least one cable passage (27, 27'), continuous in the longitudinal direction, between the fastening section (23) of the sensor and the wall (26) of the anchorage section (18), through which passage, when several sensors (14', 14", 14''') are located in the anchorage slot (10), there is guided one or more sensor cables (13", 13"'), laid in the anchorage slot (10), of one or more additional sensors (14", 14"').

2. Linear drive according to claim 1, characterized in that there are several cable passages (27, 27') between the fastening section (23) of a sensor (14) located in the anchorage slot (10) and the wall (26) of the anchorage section (18).

3. Linear drive according to claim 2, characterized in that, alongside the sensor (14) concerned run two cable passages (27, 27'), flanking the sensor (14) on opposite longitudinal sides.

4. Linear drive according to any of claims 1 to 3, characterized in that two or more sensors (14, 14', 14", 14''') are simultaneously located in the anchorage slot (10), with their sensor cables (13, 13', 13", 13"') laid in the same direction in the anchorage slot (10), wherein the sensor cable of any particular sensor (13, 13", 13''') is guided through cable passages (27, 27') of all adjoining sensors (13, 13', 13") in the direction of laying.

5. Linear drive according to any of claims 1 to 4, characterized in that the cable outlet (29) of the sensor cable (13) is provided at one end face (33) of the sensor (14) in such a way that, with the sensor (14) fixed in place, it is located within the anchorage slot (10) and preferably within the anchorage section (18).

6. Linear drive according to any of claims 1 to 5, characterized in that the sensor cables (13) of all sensors (14) located in the anchorage slot (10) run completely within the relevant anchorage slot (10) at least as far as an end face area (34) of the housing (2) of the linear drive (1).

7. Linear drive according to any of claims 1 to 6, characterized by one or more cover strips (37) inserted in the anchorage slot (10), which seal the anchorage slot (10) over at least a portion of its length at its longitudinal opening assigned to the slot neck (17) in such a way that signal cables (13) running in it are prevented from escaping.

8. Linear drive according to claim 7, characterized in that the cover strip (37) is releasably clipped into the anchorage slot (10).

9. Linear drive according to any of claims 1 to 8, characterized in that in the anchorage slot (10), formed in one or more of the transitional zones (20) between the two slot sides (19) and the slot base (21) is a longitudinal recess (28) running in the axial direction and enlarging the cross-sectional area of the anchorage section (18), and contributing towards the creation of a cable passage (27, 27').

10. Linear drive according to claim 9, characterized in that a longitudinal recess (28) is provided in each of the two transitional zones (20).

11. Linear drive according to claim 9 or 10, characterized in that the two slot sides (19) of the anchorage slot (10) have an inclined slope, moving away from one another from the slot neck (17) towards the slot base (21).

12. Linear drive according to any of claims 9 to 11, characterized in that the sensor (14) has a block-like shape.

13. Linear drive according to any of claims 9 to 12. characterized in that the anchorage slot (10) also serves to accommodate sliding blocks (16) which have a retaining section (45) located in the anchorage section (18) and with a cross-section contour corresponding to that of the anchorage section (18) without the longitudinal recesses (28).

14. Linear drive according to any of claims 1 to 13, characterized in that there are several anchorage slots (10) distributed over the outer periphery of the housing (2).

15. Linear drive according to any of claims 1 to 14, characterized in that it is in the form of a rodless linear drive.

## Revendications

1. Dispositif d'entraînement linéaire, comportant un carter (2), qui présente, sur sa surface extérieure (9), au moins une rainure d'ancrage (10) s'étendant longitudinalement, servant à la fixation d'un capteur, laquelle rainure d'ancrage possède un col de rainure (17) et une portion d'ancrage (18), située plus bas que le col de rainure (17) et plus large que celui-ci, un capteur (14) fixé dans la rainure d'ancrage (10) étant logé par une portion de fixation (23) dans la portion d'ancrage (18), et un câble de capteur (13) partant du capteur (14) pour la transmission de signaux issus du capteur, caractérisé en ce que la forme de le section transversale de la portion d'ancrage (18) de la rainure d'ancrage (10) et de la portion de fixation (23) du capteur (14) sont adaptées l'une à l'autre de manière que lorsque le capteur (14) est fixé entre cette portion de fixation (23) et la paroi (26) de la portion d'ancrage (18), il se forme au moins un canal de traversée de câble (27, 27'), s'étendant en continu dans la direction longitudinale, à travers lequel passe un câble de capteur (13", 13"'), posé dans la rainure d'ancrage (10), d'au moins un autre capteur (14", 14"'), lorsque plusieurs capteurs (14', 14", 14''') sont fixés simultanément dans la rainure d'ancrage (10).

2. Dispositif d'entraînement linéaire selon la revendication 1, caractérisé en ce que plusieurs canaux de traversée de câble (27, 27') se trouvent entre la portion de fixation (23) d'un capteur (14) fixé dans la rainure d'ancrage (10) et la paroi (26) de la portion d'ancrage (18).

3. Dispositif d'entraînement linéaire selon la revendication 2, caractérisé en ce qu'à côté du capteur (14) concerné s'étendent deux canaux de traversée de câble (27, 27'), qui encadrent le capteur (14) sur des côtés longitudinaux opposés l'un à l'autre.

4. Dispositif d'entraînement linéaire selon l'une des revendications 1 à 3, caractérisé en ce que deux capteurs (14, 14', 14", 14''') ou plus sont fixés simultanément dans la rainure d'ancrage (10), dont les câbles (13, 13', 13", 13''') sont posés dans la rainure d'ancrage (10), avec le même sens de pose, le câble d'un capteur (13, 13', 13''') respectif étant guidé à travers des canaux de traversée de câbles (27, 27') de tous les capteurs (13, 13', 13"), se suivant dans le sens de pose.

5. Dispositif d'entraînement linéaire selon l'une des revendications 1 à 4, caractérisé en ce que le point de sortie (29) du câble de capteur (13) est prévu sur un côté frontal (33) du capteur (14), de manière à se trouver à l'intérieur de la rainure d'ancrage (10) et de préférence à l'intérieur de la portion d'ancrage (18), lorsque le capteur (14) est fixé.

6. Dispositif d'entraînement linéaire selon l'une des revendications 1 à 5, caractérisé en ce que les câbles (13) de tous les capteurs (14), fixés dans la rainure d'ancrage (10), s'étendent au moins jusqu'à une zone d'extrémité (24) frontale du carter (2) du dispositif d'entraînement linéaire (1), entièrement à l'intérieur de la rainure d'ancrage (10) concernée.

7. Dispositif d'entraînement linéaire selon l'une des revendications 1 à 6, caractérisé par au moins une baguette de couverture (37), insérée dans la rainure d'ancrage (10), qui ferme la rainure d'ancrage (10) sur au moins une partie de sa longueur, sur son ouverture longitudinale associée au col de rainure (17), de manière que des câbles de signaux (13), s'étendant dans cette rainure, soient empêchés de sortir.

8. Dispositif d'entraînement linéaire selon la revendication 7, caractérisé en ce que la baguette de couverture (37) est clipsée de manière amovible dans la rainure d'ancrage (10).

9. Dispositif d'entraînement linéaire selon l'une des revendications 1 à 8, caractérisé en ce que dans la rainure d'ancrage (10) est formé, dans au moins l'une des zones de transition (20) entre ses deux flancs (19) et le fond (21) de la rainure, un renfoncement longitudinal (28) augmentant la surface de la section transversale de la portion d'ancrage (18) s'étendant dans la direction longitudinale, qui contribue à former un canal de traversée de câbles (27, 27').

10. Dispositif d'entraînement linéaire selon la revendication 9, caractérisé en ce qu'un renfoncement longitudinal (28) est prévu dans chacune des deux zones de transition (20).

11. Dispositif d'entraînement linéaire selon la revendication 9 ou 10, caractérisé en ce que les deux flancs (19) de la rainure d'ancrage (10) s'étendant en oblique et s'éloignent l'un de l'autre en direction du fond (21) de la rainure, à partir du col (17) de la rainure.

12. Dispositif d'entraînement linéaire selon l'une des revendications 9 à 11, caractérisé en ce que le capteur (14) possède une configuration du type bloc.

13. Dispositif d'entraînement linéaire selon l'une des revendications 9 à 12, caractérisé en ce que la rainure d'ancrage (10) sert en même temps à recevoir des coulisseaux (16), qui présentent une portion de maintien (45), disposée dans la portion d'ancrage (18), dont le contour de la section transversale correspond à celui de la portion d'ancrage (18), sans les enfoncements longitudinaux (28).

14. Dispositif d'entraînement linéaire selon l'une des revendications 1 à 13, caractérisé en ce que plusieurs rainures d'ancrage (10) sont prévues, réparties sur le pourtour extérieur du carter (2).

15. Dispositif d'entraînement linéaire selon l'une des revendications 1 à 14, caractérisé en ce qu'il est conçu en tant que dispositif d'entraînement linéaire sans tige de piston.
